**Europäisches Patentamt**

**European Patent Office**

**Office européen des brevets**

(19)

(11) Numéro de publication : **0 461 068 A2**

## (12) DEMANDE DE BREVET EUROPEEN

(21) Numéro de dépôt : **91810390.4**

(51) Int. Cl.⁵ : **G01K 13/00, G01J 5/00**

(22) Date de dépôt : **23.05.91**

(30) Priorité : **02.06.90 CH 1857/90**

(43) Date de publication de la demande :
**11.12.91 Bulletin 91/50**

(84) Etats contractants désignés :
**AT DE FR GB IT**

(71) Demandeur : **Métraux, Gilbert**
**Chemin des Cibleries**
**CH-1023 Crissier (CH)**

(72) Inventeur : **Métraux, Gilbert**
**Chemin des Cibleries**
**CH-1023 Crissier (CH)**

(54) **Thermomètre tympanique.**

(57)    Ce thermomètre comprend deux éléments. Un premier comportant un tube souple (13) à une extrémité duquel se trouve un capteur (12) de chaleur et à l'autre extrémité un support (14). Ces éléments (12, 13, 14) constituent une sonde destinée à être introduite dans le conduit auditif. Le second élément comporte une coque (1) sur laquelle sont fixés des moyens d'affichage (2, 3) et un bandeau élastique (9) destiné à enserrer la tête du patient. Une fois la sonde introduite dans le conduit auditif on la recouvre avec la coque (1) de manière à bien isoler l'intérieur de l'oreille.

EP 0 461 068 A2

**FIG 1**

**FIG 3**

L'invention concerne un thermomètre tympanique destiné à mesurer la température au niveau du tympan. Il a été établi qu'il y a similitude entre la température tympanique et la température centrale. Dans des situations particulières, notamment de secours en montagne, de secours lacustre ou sur mer, ou dans le cas de sujets ayant attendus quelques heures des secours dans le froid, il s'avère pratique de mesurer la température tympanique, qui donne une information très proche de la température interne moyenne. Ce qui permet de rapidement juger l'état d'hypothermie.

On connaît déjà des thermomètres tympaniques, par exemple celui défini dans le brevet US 3,507,153, mais tous ces thermomètres ont été conçus pour être utilisés par des médecins. Car il existe une difficulté pour les mettre en place, en ce sens qu'il ne faut pas blesser le patient, ni au tympan, ni dans le conduit auditif.

L'invention a pour buts de fournir un thermomètre tympanique facile à mettre en place pour une personne non spécialisée, notamment un secouriste et qui ne présente aucun danger pour le patient tout en fournissant des résultants de mesure relativement bons. Elle a aussi pour buts de réaliser un thermomètre tympanique simple et facilement transportable.

C'est après une série d'essais que le thermomètre tympanique selon l'invention défini à la revendication 1 a été mis au point de manière à remplir les buts poursuivis.

L'invention sera mieux comprise et ses avantages et ses caractéristiques apparaîtront mieux à la lecture de la description d'une forme de réalisation, donnée à titre d'exemple, en regard des dessins sur lesquels

la figure 1 représente la coque du thermomètre tympanique vue de face

la figure 2 représente une coupe selon A-A de la coque représentée à la figure 1

la figure 3 représente la sonde du thermomètre destiné à être introduit dans le conduit auditif.

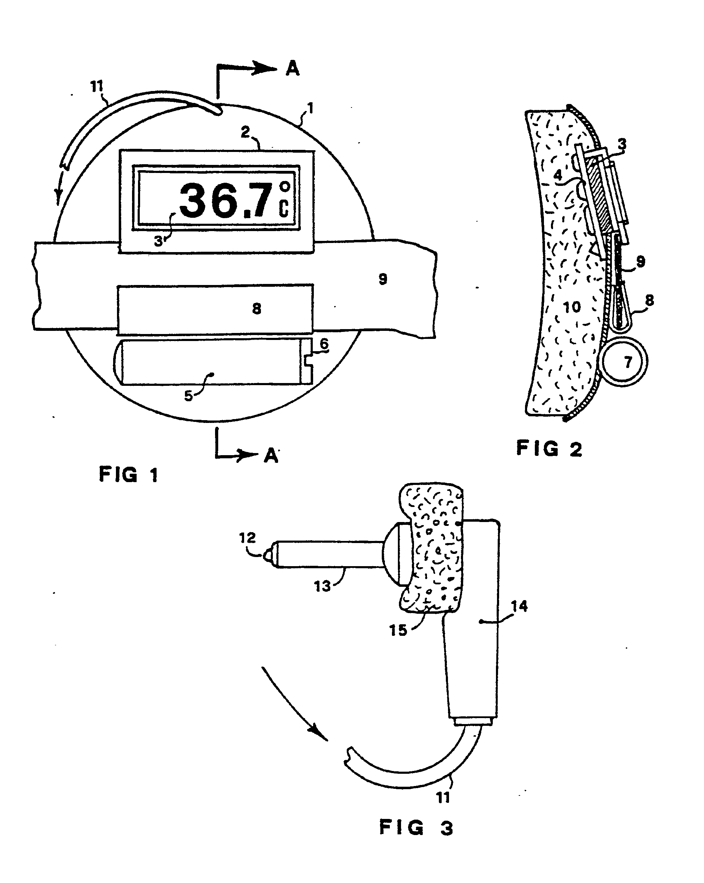

Comme on le voit sur les figures 1 et 3, le thermomètre tympanique comprend un premier élément dénommé sonde représenté à la figure 3 et un second élément constitué par une coque I représentée à la figure 1.

Le premier élément comporte un tube souple 13 constitué en matière synthétique biocompatible dont le diamètre est compris entre 2,5 et 3,5 mm. A l'une extrémité du tube souple 13 on aperçoit l'élément 12 destiné à capter la chaleur rayonnée par le tympan constitué par un élément NTC (negatif temperatur coefficient) que l'on trouve dans le commerce. A l'autre extrémité du tube 13 on voit l'élément support 14, qui ici est constitué par un élément allongé formant approximativement un angle droit avec le tube 13 et comportant une partie circulaire du côté du tube 13 autour de laquelle est disposé un anneau 15 en mousse synthétique de manière à bien obturer le conduit auditif. L'élément support pourrait être réalisé d'une autre manière par exemple ce pourrait être un disque ou une sphère. Le but de l'élément support 14 est d'empêcher l'utilisateur d'enfoncer le tube souple 13 trop profondément dans le conduit auditif, d'où sa disposition à angle droit. Dans le même but le tube 13 possède une longueur comprise entre 15 et 20 mm de manière à ce que l'élément 12 ne puisse pas toucher le tympan lorsque la sonde est mise en place dans le conduit auditif.

Le deuxième élément représenté aux figures 1 et 2 comprend une coque I rigide en matière synthétique sur laquelle sont fixés des moyens d'affichage électronique 2. Ces moyens d'affichage comprennent un cadre 2 avec un affichage à cristaux liquides 3.

Sous l'affichage électronique encastré dans la coque se trouve un "Print" électronique 4 avec les constituants des circuits. La coque I comporte encore fixés à sa partie extérieure des moyens 8 pour maintenir le bandeau élastique 9. Ces moyens sont constitués par une petite plaque 8 pliée en forme de U. Cette plaque pliée 8 est ici collée sur la surface de la coque mais elle pourrait aussi être soudée, vissée ou rivetée. Au dessous de la plaque 8 on voit un tube 5 avec un couvercle 6 vissé destiné à recevoir la pile 7 d'alimentation en courant électrique. L'intérieur de la coque I est garni de mousse synthétique 10.

Les deux éléments constituant le thermomètre tympanique représentés aux figures 1 et 3 sont reliés par un tube en matière synthétique 11 à l'intérieur duquel se trouvent les câbles reliant l'élément NTC 12 au circuit "Print".

Le thermomètre tympanique est conçu pour être utilisé de la manière suivante. Le secouriste introduit la sonde représentée à la figure 3 dans le canal auditif externe de l'accidenté de manière que le tube 13 se trouve à l'intérieur dudit canal et l'élément support 14 s'appliquant sur le pavillon de l'oreille. A ce moment l'élément annulaire 15 en mousse obture l'extérieur du canal auditif de manière à maintenir une température constante au voisinage du tympan. Après cela l'utilisateur applique la coque I sur le pavillon de l'oreille de manière à maintenir le support 14 à sa place, puis enserre la tête de l'accidenté avec le bandeau 9. La mousse 10 se trouvant à l'intérieur de la coque a deux fonctions : la première éviter que la coque blesse le pavillon de l'oreille et la seconde assurer une meilleure isolation de l'intérieur de l'oreille.

Par le système de coque d'isolation l'oreille est bien isolée vis-à-vis de l'influence extérieure, de telle sorte qu'au bout de 2 minutes environ déjà, nous obtenons l'indication de la température tympanique.

## Revendications

**1)** Thermomètre tympanique, caractérisé en ce qu'il comprend un premier élément dénommé sonde constitué d'un tube souple destiné à être introduit dans le conduit auditif externe, tube à une extrémité duquel est fixé un élément destiné à capter la chaleur rayonnée par le tympan et à l'autre extrémité duquel est fixé un support conçu pour limiter la pénétration du tube dans ledit conduit auditif, en ce qu'il comprend en outre un second élément comportant une coque sur laquelle sont fixés des moyens d'affichage électronique reliés à l'élément de captage de chaleur, coque dans laquelle se trouve une mousse synthétique, ladite coque comportant, fixé à sa partie extérieure, un bandeau élastique destiné à enserrer la tête du patient de manière à maintenir la coque sur l'oreille pour l'isoler et retenir le premier élément dans le conduit auditif.

**2)** Thermomètre selon la revendication 1, caractérisé en ce que l'élément destiné à capter la chaleur est un élément NTC.

**3)** Thermomètre selon l'une des revendications 1 et 2, caractérisé en ce que le support est un élément allongé formant un angle approximativement droit avec le tube souple.

**4)** Thermomètre selon l'une des revendications 1 et 2, caractérisé en ce que le support est un élément circulaire sous forme de disque ou de sphère.

**5)** Thermomètre selon l'une des revendications 1 à 4, caractérisé en ce que le tube souple a une longueur comprise entre 15 et 20 mm et un diamètre externe compris entre 2,5 et 3,5 mm, et en ce que les moyens destinés à obturer le conduit auditif sont constitués par un anneau en mousse synthétique.

**6)** Thermomètre selon l'une des revendications 1 à 5, caractérisé en ce que les moyens d'affichage sont constitués par des cristaux liquides.

FIG 1

FIG 2

FIG 3